(19) **Europäisches Patentamt**

**European Patent Office**

**Office européen des brevets**

(11) **EP 1 396 950 A2**

(12) **EUROPEAN PATENT APPLICATION**

(43) Date of publication:
**10.03.2004 Bulletin 2004/11**

(51) Int Cl.[7]: **H04B 10/155**

(21) Application number: **03016436.2**

(22) Date of filing: **21.07.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **09.09.2002 JP 2002262337**<br><br>(71) Applicants:<br>• **KDDI Submarine Cable Systems Inc.**<br>**Tokyo (JP)**<br>• **MITSUBISHI DENKI KABUSHIKI KAISHA**<br>**Tokyo (JP)** | (72) Inventors:<br>• **Morita, Itsuro**<br>**Kamifukuoka-shi Saitama (JP)**<br>• **Tsuritani, Takehiro**<br>**Kamifukuoka-shi Saitama (JP)**<br>• **Agata, Akira**<br>**Kamifukuoka-shi Saitama (JP)**<br>• **Edagawa, Noboru**<br>**Kamifukuoka-shi Saitama (JP)**<br><br>(74) Representative: **Schaumburg, Thoenes & Thurn**<br>**Postfach 86 07 48**<br>**81634 München (DE)** |

(54) **Optical transmission system, optical transmitter and methods thereof**

(57) To improve transmission characteristics of a CS-RZ signal, a laser diode (LD) (12) outputs a continuous light (CW light) having a wavelength λs (frequency f0). A CS-RZ pulse train shaper (14) generates a CS-RZ optical pulse train at a bit rate (B) from the CW output light from the LD (12). A data modulator (16) intensity-modulates an output optical pulse train from the shaper (14) according to a data (D) to be transmitted. An optical bandpass filter (18) passes through all of a component of carrier frequency (f0) and a component of frequency f1 (=f0 + B/2) and transmits a small amount of component of frequency f2 (=f0 - B/2).

**Fig. 1**

**Description**

FIELD OF THE INVENTION

This invention generally relates to an optical transmission system, an optical transmitter and methods thereof and more specifically relates to an optical transmission system and optical transmitter and methods thereof using carrier suppressed return to zero (CS-RZ) signals.

BACKGROUND OF THE INVENTION

In the field of optical fiber communication, dense wavelength division multiplexing (DWDM) is used for expanding transmission capacity and has been developed for narrowing wavelength intervals.

As a method to realize the DWDM, single sideband (SSB) transmission or vestigial sideband (VSB) transmission has been proposed. This is described, for instance, in US Patent Nos. 6,088,147, 6,141,141, and 6,262,834, and US Patent Application Publication No. 2002/0075546.

A system to angle-modulate an optical-intensity-modulated signal with its carrier suppressed is described in US Patent No. 6,211,996.

In addition, the CS-RZ signal has characteristics of narrow bandwidth and therefore its application to the optical DWDM can is expected. For example, see Y. Miyamoto et al. , "320 Gbit/s (8×40 Gbit/s) WDM transmission over 367 km zero-dispersion-flattened line with 120-km repeater spacing using carrier-suppressed return-to-zero pulse format", Optical Society of America (0SA) Trends in Optics and Photonics (TOPS), vol. 30, Optical Amplifiers and Their Applications, (1999). The text of this paper is incorporated in this specification for reference.

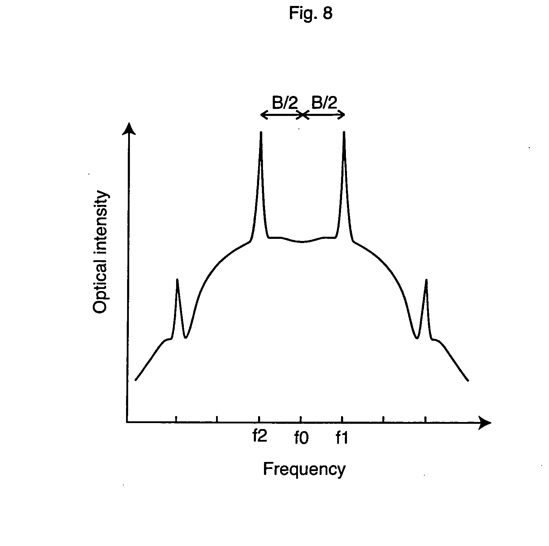

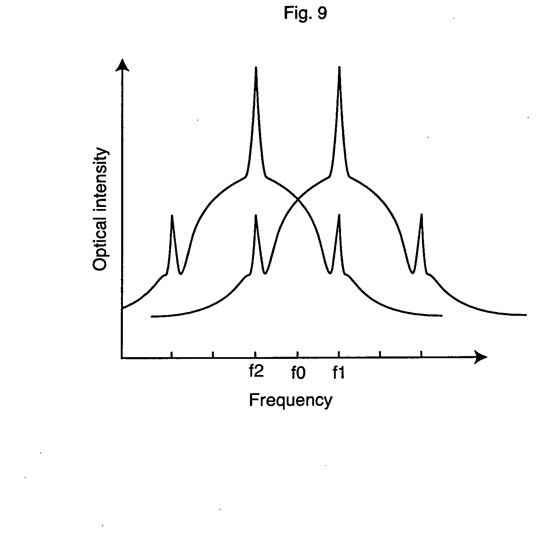

Fig. 8 is a spectrum example of a CS-RZ signal light. By reversing phases of optical pulses locating adjacent timeslots, RZ pulse signal which optical carrier (having a frequency f0) is suppressed is generated as shown in Fig. 8. From this point of view, the CS-RZ signal is considered as a composition of two NRZ signals as shown in Fig. 9. In Figs. 8 and 9, the horizontal axis expresses frequency (wavelength), and the vertical axis expresses optical intensity.

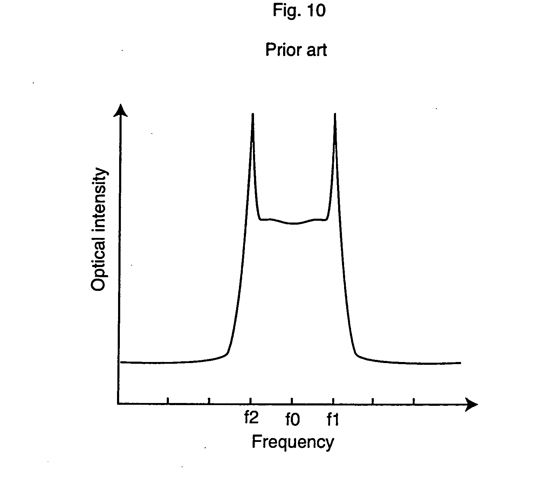

Conventionally, it has been considered that it is necessary to transmit the spectrum of the frequencies f1, f2 located on both sides of a carrier frequency f0 together in order to make a bandwidth of CS-RZ signal narrower as shown in Fig. 10 (See, for example, N. Yoshikane et al., "50GHz-spaced 55 x 42.7Gb/s transmission over 2500 km using a SPM-based all-optical reshaper", Optical amplifiers and their applications topical meeting (OAA 2002), PDP6). Fig. 10 shows a spectrum example obtained by symmetrically extracting both upper spectrum components (having a frequency f1) and lower spectrum components (having a frequency f2) from the CS-RZ optical signals having optical spectrum shown in Fig. 8. In Fig. 10, the horizontal axis expresses frequency (wavelength) and the vertical axis expresses optical intensity.

When a bit rate of CS-RZ optical signal is expressed as B (bps), the following equations are obtained:

$$f1 - f0 = B/2$$

$$f0 - f2 = B/2.$$

However, a demand for even narrower bandwidth has been increasing to improve the transmission characteristics, to improve the WDM density and/or to extend transmission distance.

SUMMARY OF THE INVENTION

An object of the invention is to provide an optical transmission system, optical transmitter and methods thereof using CS-RZ signals in a narrower bandwidth.

In the invention, a CS-RZ optical pulse train is data-modulated according to a data at a data rate (B) to generate modulated lights including a first component of a carrier frequency (f0), a second component of a frequency (f0 - B/2) in which a half of the data rate (B/2) is subtracted from the carrier frequency (f0), and a third component of a frequency (f0 + B/2) in which a half of the data rate (B/2) is added up to the carrier frequency (f0). A band limit filter extracts the first, second, and third components from the modulated light and outputs the extracted components to an optical fiber transmission line. Here, when a detune amount of the band limit filter relative to the modulated light is expressed as A and a filter bandwidth of the band limit filter is expressed as W, a condition expressed as $0 < A \times B/W^2 < 0.225$ is satisfied. More preferably, it should be $0.09 < A \times B/W^2 < 0.2$. The most preferable condition is that $A \times B/W^2$ substantially becomes 1.5.

BRIEF DESCRIPTION OF THE DRAWINGS

The above and other objects, features and advantages of the present invention will be apparent from the following detailed description of explanatory embodiments of the invention in conjunction with the accompanying drawings, in which:

Fig. 1 is a schematic block diagram of a first explanatory embodiment according to the invention;
Fig. 2 is an optical spectrum example of output light from an optical bandpass filter 18;
Fig. 3 is a measured example showing the relationship between a detune amount of an optical bandpass filter and a Q² value;

Fig. 4 is an eye pattern example in a conventional symmetrical band limitation;

Fig. 5 is an eye pattern where $\Delta\lambda$=-0.04 nm according to the embodiment;

Fig. 6 is a measured example showing the relation between a detune amount of the optical bandpass filter 18 and an improved Q² amount;

Fig. 7 is a schematic block diagram of an explanatory embodiment of WDM transmitter;

Fig. 8 is an optical spectrum example of a CS-RZ signal;

Fig. 9 is an example of optical spectrum of two no-return-to-zero (NRZ) signals composed of the CS-RZ signal; and

Fig. 10 is an optical spectrum example in a conventional symmetrical band limitation.

DETAILED DESCRIPTION

Embodiments of the invention are explained below in detail with reference to the drawings.

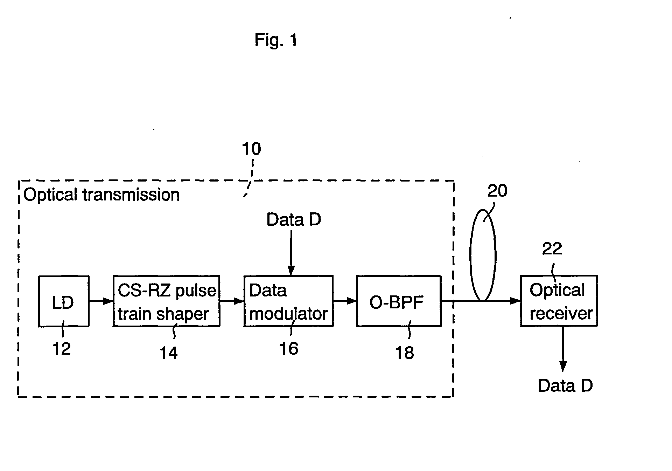

Fig. 1 shows a schematic block diagram of an explanatory embodiment according to the invention. An optical transmitter 10 comprises a laser diode (LD) 12, a CS-RZ pulse train shaper 14, data modulator 16, and an optical bandpass filter (O-BPF) 18 functioning as a band limit filter.

The LD 12 outputs continuous wave (CW) light having a wavelength $\lambda$D (frequency f0 ) . The CS-RZ pulse train shaper 14 generates a CS-RZ optical pulse train at a bit rate B out of the CW light from the LD 12. Such apparatus is described in the above paper by Y. Miyamoto et al.

The data modulator 16 intensity-modulates the optical pulse train output from the CS-RZ pulse train shaper 14 according to a data D to be transmitted. For example, the data modulator 16 blocks the optical pulse output from the CS-RZ pulse train shaper 14 when the data D shows a binary digit "0". and transmits the optical pulse output from the CS-RZ pulse train shaper 14 when the data D shows a binary digit "1".

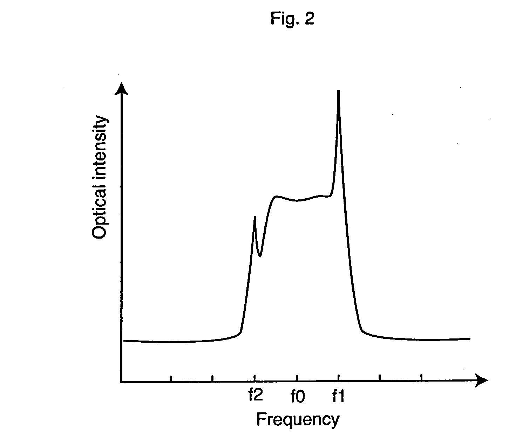

The output light from the data modulator 16 comprises, for example, an optical spectrum shown in Fig. 9. The optical bandpass filter 18 functioning as a band limit filter transmits the output light from the data modulator 16 in such manner that both of the upper component of optical carrier frequency f0 and the upper component of frequency f1 (=f0 + B/2) entirely pass through and a small amount of lower component of frequency f2 (=f0 - B/2) pass through. Fig. 2 shows an optical spectrum example of the output light from the optical bandpass filter 18 relative to the optical spectrum shown in Fig. 8. The horizontal axis expresses wavelength (frequency), and the vertical axis expresses optical intensity. That is, in the conventional example, the center frequency of the optical bandpass filter is equalized to the optical carrier frequency f0 so that the upper component of frequency f1 and the lower component of frequency f2 equally transmit. However, in the embodiment, the center frequency of the optical bandpass filter 18 is shifted from the optical carrier frequency f0 so that the upper components (or the lower components) entirely pass through the filter and only a small amount of the lower components (or the upper components) pass through the filter.

The output light of the optical bandpass filter 18 enters an optical fiber transmission line 20 as the output light from the optical transmitter 10. An optical receiver 22 receives the signal light propagated in the optical fiber transmission line 20 and restores the data D.

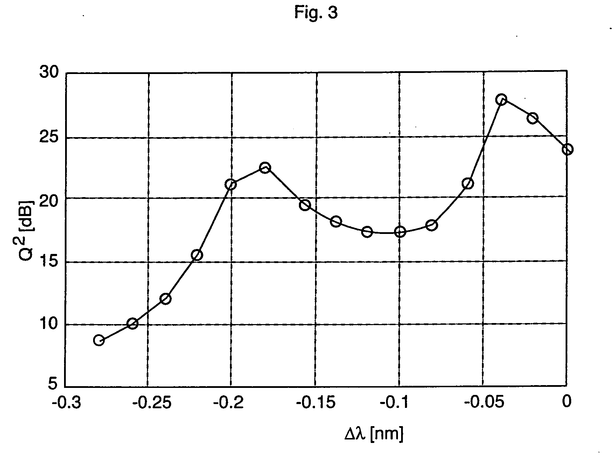

The influence by detune of the optical bandpass filter 18 functioning as a band limit filter has been experimented. Fig. 3 shows a measured result when the embodiment is applied to a 42.7 Gb/s CS-RZ optical signal. A fourth Gaussian filter was used as the optical bandpass filter 18. The horizontal axis expresses the difference $\Delta\lambda$ between the center wavelength of the optical bandpass filer 18 and the optical carrier wavelength of the CS-RZ optical signal and the vertical axis expresses Q² obtained after the signal propagated on a predetermined distance. The condition that $\Delta\lambda$=0 shows a conventional example As obvious from Fig. 3, in the band of the bandpass filter 18, Q² is more improved on the condition that -0.055<$\Delta\lambda$<0 compared to the case of $\Delta\lambda$=0. When $\Delta\lambda$=-0.04 (nm), Q² becomes maximum.

When the bandwidth of the optical bandpass filter 18 is set to another value, even if the component of frequency f2 is more reduced, a greater Q² value is obtained compared to the symmetrical band limiting. That is, in the embodiment, it is sufficient if the optical bandpass filter 18 passes at least one of the side-band components.

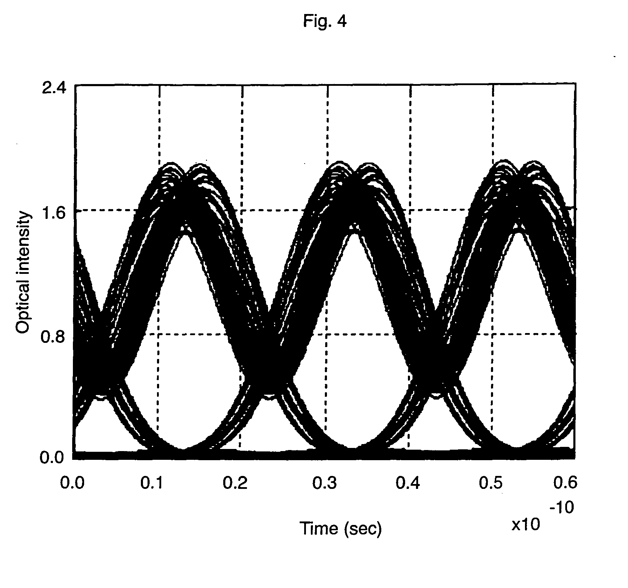

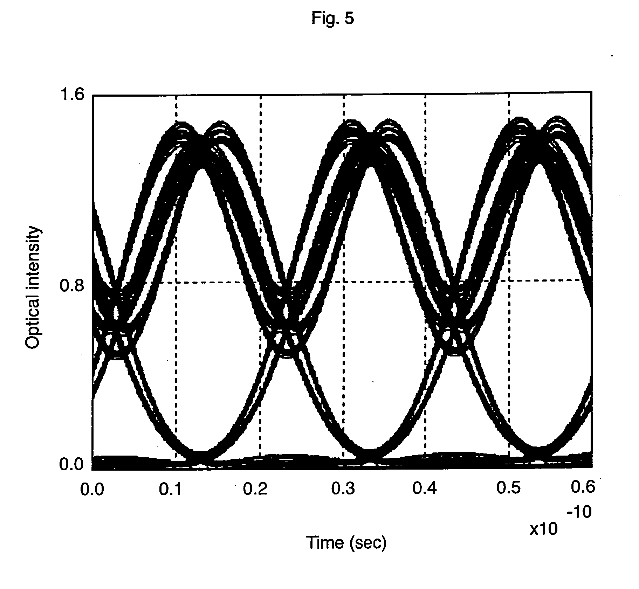

Fig. 4 shows an eye pattern where $\Delta\lambda$=0, namely an eye pattern in the symmetric band limiting. Here, an obtained result was Q² = 23.74 (dB) . Fig. 5 shows an eye pattern in the asymmetric band limiting ($\Delta\lambda$=-0.04 (nm)). Here, an obtained result was Q² = 28.11 (dB).

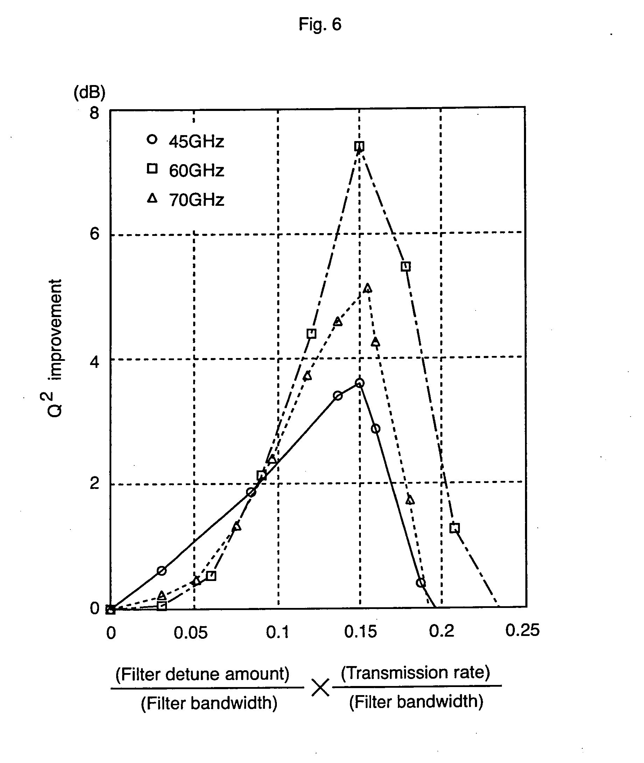

Fig. 6 shows a measured result of the function of the optical bandpass filter 18 for a 42.7 Gbit/s CS-RZ optical signal. The horizontal axis expresses a value in which a detune amount A of the optical bandpass filter 18 relative to modulated light (the output from the data modulator 16) is normalized by a data rate B of a data D to be transmitted and a filter bandwidth W. Specifically, the horizontal axis is expressed as (A/W) $\times$ (B/W). The vertical axis expresses an improvement amount (dB) of Q² value compared to the Q² value obtained when the detune amount A is 0.

The filter bandwidth of the optical bandpass filter 18 is set to 45 GHz, 60 GHz, and 70 GHz. The solid line, the broken line, and the alternate long and short dash line show results of the 45 GHz case, the 70 GHz case, and the 60 GHz case respectively. It shows that regardless of the filter bandwidths, Q² is most improved

when $(A/W) \times (B/W)$ becomes 0.15.

Within a range of $0<A\times B/W^2<0.225$, $Q^2$ is improved compared to a conventional symmetry limitation (a detune amount is 0). Within a range of $0.09<A\times B/W^2<0.2$, $Q^2$ is improved by 2 dB or more compared to a conventional symmetry limitation (a detune amount is 0).

In the case that the filter bandwidth is 45 GHz, although $Q^2$ becomes 19.9 dB at the detune amount of 0, it is improved to 23.5 dB when the detune is set to the optimum value. In the case that the filter bandwidth is 60 GHz, although $Q^2$ becomes 17.1 dB at the detune amount of 0, it is improved to 24.5 dB when the detune is set to the optimum value. In the case that the filter bandwidth is 70 GHz, although $Q^2$ becomes 19.5 dB at the detune amount of 0, it is improved to 24 .5 dB when the detune amount is set to the optimum value.

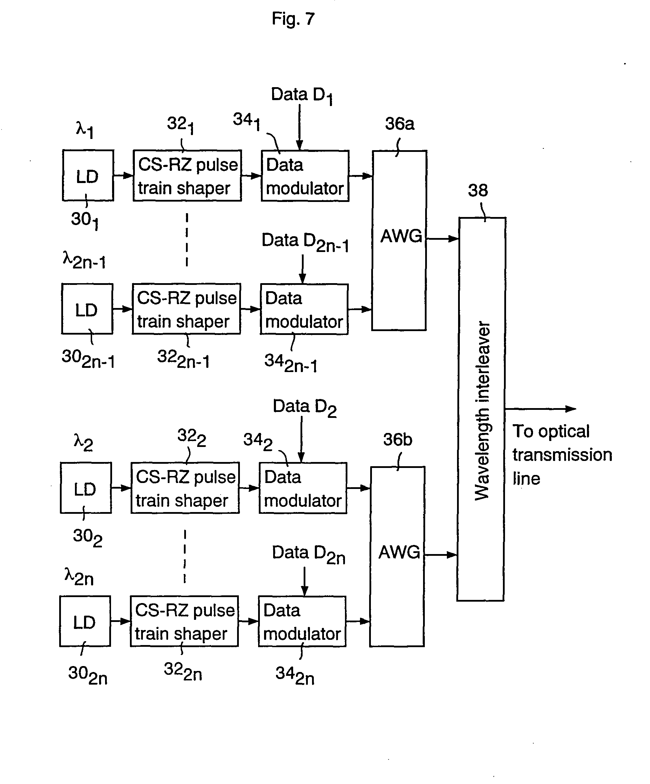

Fig. 7 shows a schematic block diagram of an embodiment of WDM optical transmitter. In this embodiment, 2n wavelengths are multiplexed.

Laser diodes $30_1$-$30_{2n-1}$ respectively output continuous wave (CW) lights of odd number wavelengths $\lambda_1$-$\lambda_{2n-1}$. CS-RZ pulse train shapers $32_1$-$32_{2n-1}$ having the same configuration with the CS-RZ pulse train shaper 14 generate CS-RZ optical pulse trains having a bit rate B from the CW output lights from the laser diodes $30_1$-$30_{2n-1}$ respectively. Data modulators $34_1$-$34_{2n-1}$ intensity-modulate the optical pulse trains output from the CS-RZ pulse train shapers $32_1$-$32_{2n-1}$ according to data $D_1$-$D_{2n-1}$ to be transmitted. The functions of the CS-RZ pulse train shapers $32_1$-$32_{2n-1}$ and the data modulators $34_1$-$34_{2n-1}$ are identical to those of the CS-RZ pulse train shaper 14 and data modulator 16 respectively. An arrayed waveguide grating (AWG) 36a multiplexes the output lights from the data modulators $34_1$-$34_{2n-1}$. The arrayed waveguide grating (AWG) 36a functions as a multiplexer to wavelength-division-multiplex the signal lights of the odd number wavelengths $\lambda_1$-$\lambda_{2n-1}$. When the odd number wavelengths $\lambda_1$-$\lambda_{2n-1}$ alone are multiplexed, it is not necessary to limit its bandwidth because spectra of adjacent wavelengths do not superimposed.

The configuration for even number wavelengths $\lambda_2$-$\lambda_{2n}$ is basically the same to the above-described configuration for the odd number wavelengths $\lambda_1$-$\lambda_{2n-1}$. That is, the laser diodes $30_2$-$30_{2n}$ respectively output continuous wave (CW) lights of the even number wavelengths $\lambda_2$-$\lambda_{2n}$. CS-RZ pulse train shapers $32_2$-$32_{2n}$ having the same configuration with the CS-RZ pulse train shaper 14 generate CS-RZ optical pulse trains having a bit rate B from the CW output lights from the laser diodes $30_2$-$30_{2n}$ respectively. Data modulators $34_2$-$34_{2n}$ intensity-modulate the optical pulse trains output from the CS-RZ pulse train shapers $32_2$-$32_{2n}$ according to data $D_2$-$D_{2n}$ to be transmitted. An arrayed waveguide grating (AWG) 36b multiplexes the output lights from the data modulators $34_2$-$34_{2n}$.

The functions of the CS-RZ pulse train shapers $32_1$-$32_{2n}$ and the data modulators $34_1$-$34_{2n}$ are identical to those of the CS-RZ pulse train shaper 14 and data modulator 16 respectively. The arrayed waveguide grating 36b functions as a multiplexer to wavelength-division-multiplex the signal lights of the even number wavelengths $\lambda_2$-$\lambda_{2n}$. When the even number wavelengths $\lambda_2$-$\lambda_{2n}$ alone are multiplexed, it is not necessary to limit its bandwidth because spectra of adjacent wavelengths do not superimposed.

A wavelength interleaver 38 multiplexes output lights from the arrayed waveguide gratings 36a and 36b. The wavelength interleaver 38 comprises optical bandpass filtering characteristics. Therefore, by controlling center wavelengths in the optical bandpass filtering characteristics in the wavelength interleaver 38, it is possible to apply a. desired detune to both signal lights having the odd number wavelengths $\lambda_1$-$\lambda_{2n-1}$ and even number wavelengths $\lambda_2$-$\lambda_{2n}$ in the lump. That is, the wavelength interleaver 38 functions as the optical bandpass filter 18.

As readily understandable from the aforementioned explanation, according to the invention, the transmission characteristics of a CS-RZ signal can be largely improved. Since the transmission characteristics are improved keeping a spectrum width per channel narrow, the multiplexing density of WDM can be increased and the transmission distance can be extended.

**Claims**

1. An optical transmission system comprising an optical transmitter (10), an optical fiber transmission line (20), and an optical receiver (22) wherein

   the optical transmitter (10) comprises

   a CS-RZ optical pulse train generator (12, 14) to generates a CS-RZ pulse train having an optical carrier frequency (f0);

   a data modulator (16) to intensity-modulate the output optical pulse from the CS-RZ optical pulse train generator with a data (D) to be transmitted at a data rate (B) so as to output a modulated light containing a first component of the carrier frequency (f0), a second component of a frequency (f0-B/2 in which a half of the data rate ( B/2 ) is subtracted from the carrier frequency (f0), and a third component of a frequency (f0 + B/2) in which a half of the data rate (B/2) is added to the carrier frequency (f0); and

   a band limit filter (18)to extract the first, second and third components from the modulated light to output the extracted components for the optical fiber transmission line (20), the band limit filter being detuned such that a condition of $0<A\times B/W^2<0.225$ is satisfied when the detune amount relative to the modulated light is expressed as A and the filter bandwidth is expressed as W.

**2.** The optical transmission system of claim 1 wherein $0.09 < A \times B/W^2 < 0.2$.

**3.** The optical transmission system of claim 1 wherein $A \times B/W^2$ is substantially 0.15.

**4.** An optical transmission method comprising steps of:

generating a CS-RZ optical pulse train of an optical carrier frequency (f0);
intensity-modulating the output optical pulse from the CS-RZ optical pulse train with a data (D) to be transmitted at a data rate (B) to generate a modulated light containing a first component of the carrier frequency (f0), a second component of a frequency (f0-B/2) in which a half of the data rate (B/2) is subtracted from the carrier frequency (f0), and a third component of a frequency (f0 + B/2) in which a half of the data rate (B/2) is added to the carrier frequency (f0); and
extracting the first, second, and third components from the modulated light under condition of $0 < A \times B/W^2 < 0.225$ for a filter band width (W) and a detune amount (A).

**5.** The method of claim 4 wherein $0.05 < A \times B/W^2 < 0.2$.

**6.** The method of claim 4 wherein $A \times B/W^2$ is substantially 0.15.

**7.** The method of claim 6 further comprising steps of:

transmitting the extracted components in an optical fiber; and
receiving the data from the output light from the optical fiber transmission line.

**8.** An optical transmitter comprising:

a CS-RZ optical pulse generator (12, 14) to generate a CS-RZ optical pulse train having an optical carrier frequency (f0);
a data modulator (16) to intensity-modulate the output optical pulse from the CS-RZ optical pulse train generator with a data (D) to be transmitted at a data rate (D) so as to output a modulated light containing a first component of the carrier frequency (f0), a second component of a frequency (f0 - B/2) in which a half of the data rate (B/2) is subtracted from the carrier frequency (f0), and a third component of a frequency (f0 + B/2) in which a half of the data rate (B/2) is added to the carrier frequency (f0); and
a band limit filter (18) to extract the first, second, and third components from the modulated light so as to output the extracted components for an optical fiber transmission line (20), the band limit filter being detuned such that a condition of $0 < A \times B/W^2 < 0.225$ is satisfied when the detune amount relative to the modulated light is expressed as A and the filter bandwidth is expressed as W.

**9.** The optical transmitter of claim 8 wherein $0.05 < A \times B/W^2 < 0.2$.

**10.** The optical transmission method of claim 7 wherein $A \times B/W^2$ is substantially 0.15.

EP 1 396 950 A2

Fig. 1

**10**

Optical transmission

| LD | → | CS-RZ pulse train shaper | → | Data modulator | → | O-BPF |

Data D

**20**

**22**

Optical receiver

Data D

12

14

16

18

6

Fig. 2

Fig. 3

Fig. 4

Fig. 5

Fig. 6

Fig. 7

$\lambda_1$    $32_1$    $34_1$    Data $D_1$    36a    38

| LD | → | CS-RZ pulse train shaper | → | Data modulator | → |

$30_1$

$\lambda_{2n-1}$    Data $D_{2n-1}$    AWG

| LD | → | CS-RZ pulse train shaper | → | Data modulator | → |

$30_{2n-1}$    $32_{2n-1}$    $34_{2n-1}$

Wavelength interleaver

To optical transmission line

Data $D_2$

$\lambda_2$    $32_2$    $34_2$    36b

| LD | → | CS-RZ pulse train shaper | → | Data modulator | → |

$30_2$

$\lambda_{2n}$    Data $D_{2n}$    AWG

| LD | → | CS-RZ pulse train shaper | → | Data modulator | → |

$30_{2n}$    $32_{2n}$    $34_{2n}$

Fig. 8

Fig. 9

Fig. 10

Prior art